# EUROPÄISCHE PATENTSCHRIFT

(11) **EP 0 787 064 B1**
(45) Veröffentlichungstag und Bekanntmachung des Hinweises auf die Patenterteilung: **12.03.2003**
(21) Anmeldenummer: 95936527.1
(22) Anmeldetag: 20.10.1995
(51) Int. Cl.: B29B 7/84

(54) **VERFAHREN UND VORRICHTUNG ZUM KONTINUIERLICHEN MISCHEN UND ENTGASEN VON FLÜSSIGEN, GIESSFÄHIGEN MEDIEN BESTEHEND AUS GIESSHARZKOMPONENTEN UND GGF. FÜLLSTOFF**
PROCESS AND DEVICE FOR CONTINUOUS MIXING AND DEGASSING OF FLUID, CASTABLE MEDIA CONSISTING OF CAST RESIN COMPONENTS AND, OPTIONALLY, FILLER
PROCEDE ET DISPOSITIF DE MELANGE EN CONTINU ET DE DEGAZAGE DE SUBSTANCES LIQUIDES COULABLES CONSTITUEES DE COMPOSANTS DE RESINE DE COULEE ET EVENTUELLEMENT DE CHARGE

(30) Priorität: 20.10.1994 DE 4437598
(43) Veröffentlichungstag der Anmeldung: 06.08.1997
(73) Patentinhaber: Wilhelm Hedrich Vakuumanlagen GmbH & Co.KG, D-35630 Ehringshausen (DE)
(72) Erfinder: HÄUSER, Erhard, D-35641 Schöffengrund (DE)
(74) Vertreter: Müller, Eckhard, Dr.
(86) Internationale Anmeldenummer: EP9504113
(87) Internationale Veröffentlichungsnummer: WO96012596

(56) Entgegenhaltungen:
- DE-A- 3 207 432
- DE-A- 3 637 775
- DE-A- 3 818 003
- DE-A- 4 222 695
- FR-A- 2 530 485
- GB-A- 1 174 219
- US-A- 5 332 309

## Beschreibung

Die Erfindung bezieht sich auf ein Verfahren zum kontinuierlichen Mischen und Entgasen von flüsigen, gießfähigen Medien bestehend aus mehreren Gießharzkomponenten oder wenigstens einer Gießharzkomponente und einer Füllstoff-Komponente, wie Quarzmehl, Aluminiumoxyd oder Farbstoffen, mittels einer Durchlaufentgasungs- und Mischeinrichtung sowie eine Vorrichtung zum Durchführen des Verfahrens.

Aus der US-A 5 332 309 ist bereits ein derartiges Verfahren beziehungsweise eine derartige Vorrichtung bekannt. Dabei werden der unter Überdruck betriebenen Vorrichtung über separate Zuführungen der Füllstoff sowie ein gießfähiges flüssiges Medium zugeführt. Dabei kann vor der Mischzone für den Füllstoff und das gießfähige flüssige Medium eine Kompressionszone für den Füllstoff vorgesehen sein, in der in dem Füllstoff vorhandene Luft aus diesem entfernt wird. Die Luft tritt dann aus der Vorrichtung über einen Kanal aus, der dem Eintrittskanal für das gießfähige flüssige Medium benachbart angeordnet ist. Eine vakuumdichte Abdichtung zwischen dem Einlaß für den Füllstoff und der Mischzone ist bei dieser Vorrichtung nicht gegeben, so dass das aus der Vorrichtung austretende Produkt bestenfalls von Grobblasen befreit ist. Des weiteren ist die Vorrichtung äußerst kompliziert und aufwendig aufgebaut.

Aus der DE-A 38 18 003 ist eine Vorrichtung zum Entgasen eines Gemisches aus polymeren Bindemitteln und Füllstoffen und/oder Fasern bekannt, wobei eine fertige Mischung der Entgasungsvorrichtung zugeführt wird. Die Entgasungsvorrichtung weist eine Vakuumkammer auf, die mit der eine Schnecke beinhaltenden Fördereinrichtung in gasdichter Verbindung steht. Die Schnecke der Fördereinrichtung weist eine Vielzahl unterschiedlicher Steigungen auf, so dass über den Transportweg des Gemisches mehrere Dekompressions- beziehungsweise Kompressionszonen gebildet werden. Weiterhin kann alternativ im Bereich einer Kompressionszone unmittelbar vor der Vakuumkammer ein Druckstück vorgesehen sein, das so bemessen sein soll, dass einerseits der Druck des Gemisches in der Kompressionszone die erforderliche Abdichtung des Vakuums in der Vakuumkammer gewährleistet, andererseits jedoch über die Schnecke das Gemisch über einen Spalt zwischen Druckstück und Stoffzylinder gefördert wird. Auch diese Vorrichtung ist sehr kompliziert aufgebaut, wobei die Güte der Vakuumabdichtung vom--jeweils eingesetzten Material und dem Volumenstrom-abhängigist, so dass Lufteinbrüche in die Vakuumkammer nicht sicher ausgeschlossen wird.

Die DE-A 36 37 775 offenbart eine Vorrichtung zum kontinuierlichen Entgasen eines Gemisches aus polymeren Bindemitteln und Füllstoffen und/oder Fasern, wobei das Gemisch aus einer Mischmaschine einer Dosiereinheit zugeführt wird. Unter der Dosiereinheit ist eine Vakuumkammer angeordnet, an die das Gemisch über Ventile abgegeben wird. Die Durchflußquerschnitte und Länge der Ventile sind veränderbar. Die Veränderung erfolgt automatisch in Abhängigkeit von dem Füllstand des Gemisches in der Dosiereinheit. Unterhalb der Vakuumkammer ist gasdicht eine Fördereinrichtung angeordnet, die das Gemisch aufnimmt und nach außen fördert. Abhängig von dem Füllstand des Gemisches in der Dosiereinheit sind eines der Ventile, mehrere oder alle Ventile geöffnet. In folge des in der Vakuumkammer herrschenden Unterdrucks wird das Gemisch durch die mittels der Ventile jeweils geöffneten Rohre aus der Dosiereinheit in die Vakuumkammer gerissen, wodurch die Oberfläche des Gemisches vergrößert und der Entgasungsvorgang durchgeführt wird. Welches beziehungsweise wie viel Ventile geöffnet sind, hängt von dem Füllstand des Gemisches in der Wanne ab. Oberhalb der Wanne ist ein Ultraschallsensor angeordnet, der auf die Oberfläche des Gemisches gerichtet ist.

Der Ultraschall-Sensor mißt den Gemisch-Pegel in der Wanne. Steigt der Pegel durch erhöhte Zufuhr des Gemisches aus der Mischmaschine an, werden über den Ultraschallsensor weitere Ventile geöffnet, sinkt der Gemisch-Pegel hingegen, werden zuvor geöffnete Ventile geschlossen. Ein Mischen und Entgasen von wenigstens zwei Produktströmen und demgemäß ein Eindosieren der Produktströme in die Vorrichtung ist nicht vorgesehen.

Die FR-A 2 530 485 offenbart eine Misch- und Entgasungsvorrichtung für zähflüssige Stoffe, welche einen mit einem Rührwerk versehenen Behälter mit Temperaturregelung aufweist. Oberhalb der die Heiz-/Kühlelemente bildenden Rohrschlangen ist ein mit einer Rührwelle drehfest verbundener, nach unten kegelstumpffönniger Verteilerteller. Der Verteilerteller kann einteilig oder stufenartig mit mindestens einer Stufe ausgebildet sein, wobei dessen mit Ausnehmungen versehener Außenumfang verschiedene Radien aufweist. Oberhalb des Verteilertellers ist ein Zuführungsrohr für die Zuführung des Isoliermittels, vorzugsweise eine Mehrkomponenten-Kunstharz-Imprägniermittels oder einer -Vergußmasse vorgesehen. Im Behälterboden ist des weiteren ein Ablaß-Stutzen für die Weiterleitung des Isoliermittels zu einem Imprägnierbeziehungsweise Gießkessel angeordnet.

Aus der DE-A 42 22 695 ist bspw. eine Vorrichtung und ein Verfahren zur kontinuierlichen Entgasung von Gießharz bekannt. Bei der Gießharzverarbeitung müssen die Harze bzw. Härter unter Umständen mit Füllstoffen, wie bspw. Quarzmehl, Mikrodol (gemahlener Dolomit), Aluminiumoxid und dgl., aber auch u. a. mit Farbstoffen vermischt und unter Vakuum entgast werden, damit die aus diesen Gießharzformulierungen hergestellten Produkte, wie bspw. elektrisch isolierende Teile, die geforderten Eigenschaften erhalten. Während die Mischungen Harz/Füllstoff bzw. Härter/Füllstoff bei sogenannten Formulierbetrieben hergestellt und von dort an den Endverbraucher geliefert werden, führen andere Endverarbeiter diese Formulierungen der Harz- bzw. Härter/Füllstoffmischungen selbst durch. Üblicherweise wird in beiden Fällen chargenweise gearbeitet.

Im Falle der Formulierung beim Endverarbeiter wird auch in der Regel eine Entgasung der Komponenten vorgenommen, so dass chargenweise Material zur Verarbeitung bereit steht. Kommt das Material von einem Formulierbetrieb, muß es vor der Verarbeitung noch auf Temperatur gebracht und unter Vakuum entgast werden. Diese Arbeitsweise verursacht unwirtschaftliche Arbeitsunterbrechungen, wenn nach Verbrauch einer Charge auf die Bereitstellung der nächsten gewartet werden muß. In der Regel wird deshalb so vorgegangen, dass solche Chargengrößen für ein bzw. zwei Schichten täglich ausreichen und in der noch verbleibenden Zeit, vorzugsweise während der Nacht, wieder aufgefüllt bzw. neu dosiert und gemischt werden. Demgemäß müssen die Vorratsbehälter und Mischer entsprechend groß ausgelegt sein. Soll nun rund um die Uhr ständig Gießmasse zur Verfügung stehen, so müssen zusätzliche Chargenmischer bereit gehalten werden. Diese Chargenmischer werden stromaufwärts vor dem Vorratsbehälter angeordnet, aus denen dann das Material verarbeitet wird. Abgesehen von einem entsprechenden baulichen Aufwand ergeben sind auch größere Materialvorratsmengen, die über längere Zeit, mitunter Stunden auf ihre Verarbeitung warten. Des weiteren ergeben sich längere Vorlaufzeiten bis zur Verarbeitung. Außerdem benötigen derartige Chargenmischer, selbst wenn sie als sogenannte Dünnschichtentgasungsmischer ausgeführt sind, eine relativ lange Zeit für die Entgasung der Gemische, da die vom Ablaufkonus in die Charge zurückfließende, besser entgaste Mischung ständig mit der noch nicht optimal entgasten Charge vermischt wird.

Davon ausgehend liegt der Erfindung die Aufgabe zugrunde, ein Verfahren und eine Vorrichtung zum Durchführen des Verfahrens gemäß der eingangs näher bezeichneten Art anzugeben, die mit geringerem baulichen Aufwand und, bezogen auf die in der Anlage befindliche Gesamtmaterialmenge, mit kleinen, bereits vorformulierten Materialmengen auskommt.

Verfahrensmäßig wird die Aufgabe durch die Merkmale des Anspruchs 1 gelöst.

Hierdurch kann der Durchlaufentgasungseinrichtung bspw. eine Gießharzkomponente und Füllstoff zugeführt werden, welche wenige Minuten später bereits zur Verarbeitung gelangen. Größere Vorratsmengen treten nicht mehr auf, so dass das Material stets dem gleichen Streß durch Temperatur, Zeit und Mischorgane unterliegt. Auch ergeben sich kurze Wege für die Komponenten. Mit dem erfindungsgemäßen Verfahren können sowohl mehrere flüssige Komponenten als auch wenigstens eine flüssige Komponente und Füllstoff kontinuierlich gemischt und entgast werden.

Eine mögliche Ausführungsform einer Durchlaufentgasungseinrichtung ist in der DE-A 42 22 695 beschrieben, welche zur kontinuierlichen Entgasung von Gießharz, d. h. einer bereits vorformulierten Komponente dient. Sie weist ein Gehäuse auf, welches zur Durchleitung einer Gießharzkomponente mit einem Einlaß und einem Auslaß versehen und mit einer Vakuumquelle verbunden ist. In dem Gehäuse sind mehrere Bereich ausgebildet, durch welche das Gießharz zur stufenweisen Entgasung aufeinanderfolgend geleitet wird, wobei jedem Bereich Mittel zum Aufbringen des Gießharzes auf den Bereichen zugeordneten Entgasungsflächen und Mittel zum Überführen des Gießharzes in den nächsten Bereich zugeordnet sind. Bei der Vorrichtung nach der DE 42 22 695 A1 wird hierdurch eine kontinuierliche Entgasung einer Gießharzkomponente erreicht, ohne dass jedoch eine gleichzeitige Mischung in vorgegebenen Rezepturanteilen vorgenommen wird. Erfindungsgemäß wirkt die Durchlaufentgasungseinrichtung bei dieser Ausführungsform jedoch nicht nur zum Entgasen, sondern gleichzeitig zum Entgasen und Mischen von Gießharzkomponenten ggf. mit Füllstoff.

Die Dosierung der flüssigen Komponenten, bspw. des Harzes und des Füllstoffes, kann nach einer Ausgestaltung der Erfindung volumetrisch und/oder gravimetrisch erfolgen, um so die jeweiligen Rezepturanteile zu ermitteln.

Vorrichtungsmäßig wird die Aufgabe durch die Merkmale des Anspruchs 4 gelöst. Dabei kann der Mischer besonders klein, bspw. als sogenannter Chargenmischer gebaut werden.

Nach der Erfindung können volumetrische Dosiermittel, wie bspw. Dosierpumpen, Zahnradpumpen, Kolben-Zylinder-Anordnungen, Ovalradzäbler, Dosierschnecken, aber auch gravimetrische Dosiermittel, wie Waagen o. dgl. eingesetzt werden. Die dosierte Füllstoffzugabe erfolgt vorzugsweise gravimetrisch, während der Rezepturanteil der wenigstens einen flüssigen Komponente volumetrisch ermittelt wird. Selbstverständlich ist es aber auch möglich, die Füllstoffmenge volumetrisch mittels einer Dosierschnecke zu bestimmen und dabei die Umdrehung der Schnecke mittels Inkrementalgeber abzutasten.

Ausführungsbeispiele der vorliegenden Erfindung ergeben sich aus der nachfolgenden Beschreibung der Figuren.

Es zeigen:

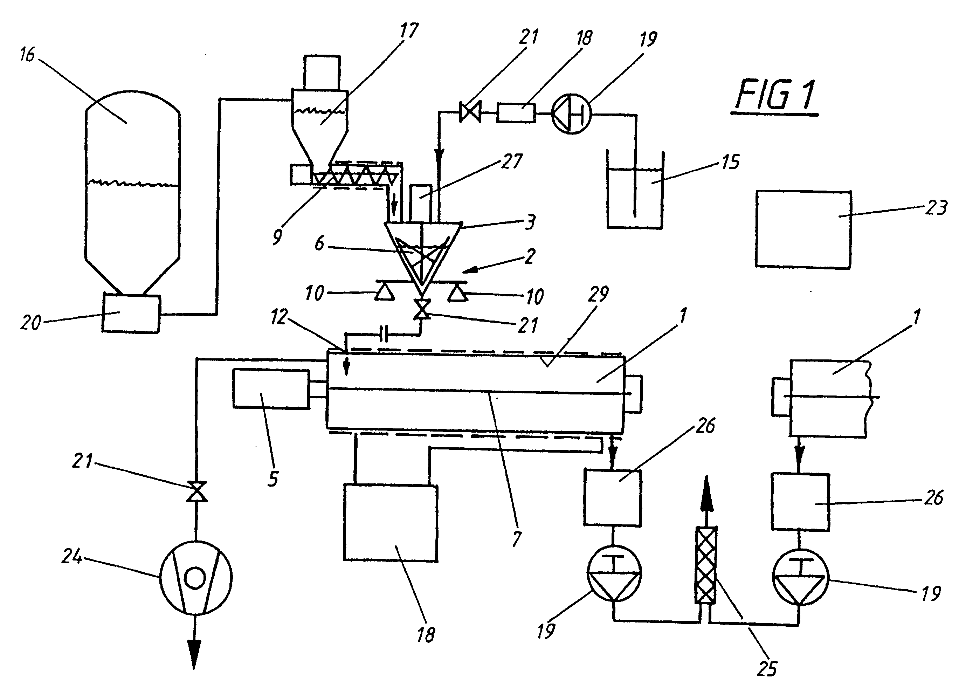

- Figuren 1 bis 5: jeweils schematische Darstellungen einer Misch- und Entgasungsanlage , teils im Schnitt.

Es sei darauf hingewiesen, dass der in den Figuren 1, 2 und 5 dargestellte Sachverhalt nicht zur Erfindung gehört

In Figur 1 ist eine Gießharzverarbeitungsanlage dargestellt, welche insbesondere die Mischung und Entgasung einer Flüssigkeitskomponente und eines Füllstoffes ermöglicht. Die Anlage umfaßt einen Vorratsbehälter 15 für die flüssige Komponente, welche mittels einer als Dosiermittel 2 wirkenden Pumpeinrichtung 19, über eine in die Förderleitung zwischengeschaltete Heizung 18 und einem nachfolgendem Ventil 21 einem Mischer 3, insbesondere einem kleinen Chargenmischer zuführbar ist.

Der bei dem hier gewählten Beispiel der einen Flüssigkeitskomponente des Gießharzes zuzugebende Füllstoff, wie bspw. Quarzmehl, ist in einem Silo 16 aufgenommen und über eine Fördereinrichtung 20 einem Vorratsgefäß 17 zuführbar. Über das Vorratsgefäß 17 gelangt der Füllstoff mittels einer Dosierschnecke 9 ebenfalls zum Mischer 3. Im Mischer 3 erfolgt die Mischung der Gießharzkomponente, bspw. des Harzes, mit dem Füllstoff. Hierfür ist in dem Mischer 3 ein Mischorgan 6 vorgesehen, welches mittels des Mischantriebes 27 in Drehbewegung versetzt wird. Für die Harzvorlage kann der Rezepturanteil bspw. mittels der Dosierpumpe 19 volummetrisch ermittelt werden. Selbstverständlich ist auch eine gravimetrische Ermittlung des Rezepturanteils mittels der in Figur 1 an dem Mischer 3 angeordneten Waage 10 möglich. Die Füllstoffzugabe erfolgt bevorzugt durch Messung des Gewichtes des Mischers mittels der Waage 10, welche bei Erreichen des jeweiligen Rezepturanteils die Dosierschnecke 9 über einen Steuer- oder Regelkreis, bspw. über die Regelung 23 stoppt.

Danach läuft der Mischer 3 an und mischt die flüssige Komponente und den Füllstoff in einer vorgegebenen Zeit.

Während der Zugabe von flüssiger Komponente und Füllstoff und während des Mischvorganges ist das in die Zuführungsleitung zur Durchlaufentgasungseinrichtung 1 zwischengeschaltete Absperrorgan 21 geschlossen. Nach Beendigung des Mischvorganges öffnet das Ventil 21 und das vorformulierte Gemisch wird über den Produkteinlaß 12 in die Durchlaufentgasungseinrichtung 1 eingesaugt. An die Durchlaufentgasungseinrichtung 1 ist eine Vakuumpumpe 24 mit vorgeschaltetem Ventil 21 angeschlossen ist. Innerhalb der Durchlaufentgasungseinrichtung 1 erfolgt ein kontinuierlicher Durchlauf des Gießharzmaterials mit vollständiger Entgasung. Die Durchlaufentgasungseinrichtung kann bspw. so ausgebildet sein, wie sie in der DE 42 22 695 A1 beschrieben ist. In Figur 1 ist von den Einbauten der Durchlaufentgasungseinrichtung lediglich der Antrieb 5 zu erkennen, welcher das in den weiteren Figuren näher dargestellte Drehorgan 7 in Form einer Antriebswelle mit Mitteln 28 zum Aufbringen und Abstreifen des Gießharzes von den Entgasungsflächen 29. Die entgaste Gießharzkomponente mit Füllstoffzuschlag wird dann über eine Dosierpumpe 19 einem Durchlaufmischer 25 zugeführt, wobei die zweite Komponente, insbesondere der Härter, ebenfalls über eine nur teilweise dargestellte Durchlaufentgasungseinrichtung 1 und eine weitere Dosierpumpe 19 dem Durchlaufmischer 25 zugeführt wird. Am Auslaß des Durchlaufmischers 25 kann sich ein Gießventil (nicht dargestellt) befinden, um die gemischte Gießharzmasse einer ebenfalls nicht dargestellten Gießform zuzuführen. Zusätzlich ist in beiden Komponentenzweigen ein kleines Sammelgefäß 26 für die nachgeschalteten Dosierpumpen 19 vorgesehen.

Um einen Luftdurchschlag in dem unter Atmosphärendruck stehenden Mischer 3 in die unter Vakuum stehende Durchlaufentgasungseinrichtung 1 zu vermeiden, sind bei dem Beispiel gemäß Figur 1 die Waage 10 oder beispielsweise eine (nicht dargestellte) Füllstandssonde vorgesehen, welche den jeweiligen Füllstand im Mischer 3 detektiert und bei einem zulässigen Minimum des Füllstandes das Ventil 21 schließt.

Mit einer Abänderung der Anlage gemäß Figur 1 kann auch ein kontinuierlicher Zufluß von vorformulierter Gießharzmasse zur Durchlaufentgasungeinrichtung 1 erreicht werden. Hierzu werden zwei Mischer 3 vorgesehen, welche im Tandembetrieb arbeiten, derart, daß die Gießharzmasse des einen Mischers 3 dann in die Durchlaufentgasungseinrichtung 1 entladen wird, wenn der andere Mischer 3 im jeweiligen Rezepturverhältnis mit Gießharz und Füllstoff gefüllt wird, um anschließend seinen Mischvorgang durchzuführen.

Bei den weiteren Beispielen sind die den Bauteilen gemäß Figur 1 entsprechenden Funktionsteile mit identischen Bezugszeichen versehen, so daß insoweit auf eine Beschreibung im einzelnen verzichtet werden kann.

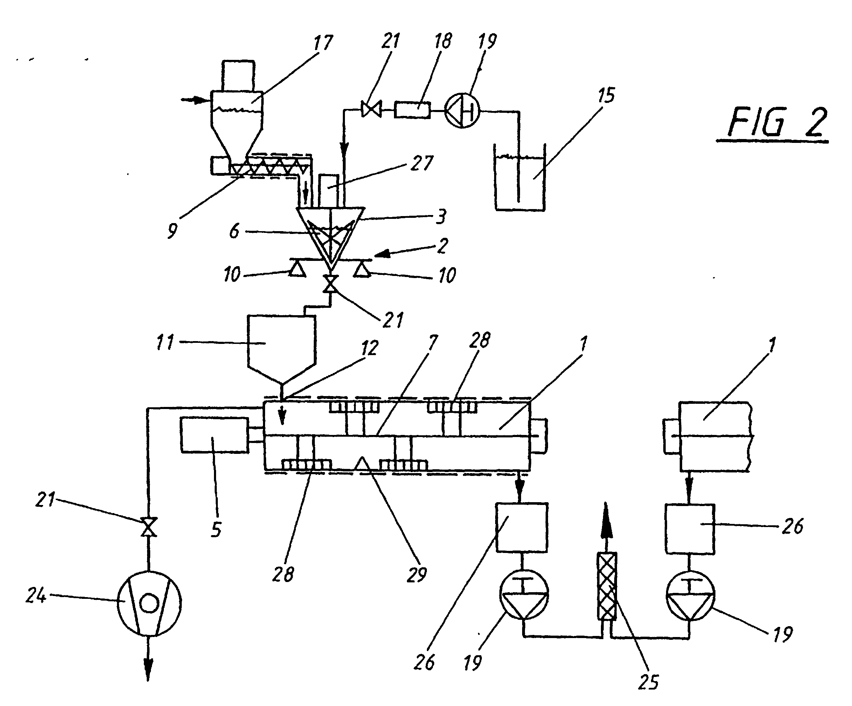

Der wesentliche Unterschied des Beispiels gemäß Figur 2 zu demjenigen gemäß Figur 1 besteht darin, daß zwischen Mischer 3 und Durchlaufentgasungseinrichtug 1 ein Zwischenbehälter 11 angeordnet ist, welcher als Speicher für die aus dem Mischer 3 kommende vorformulierte Gießharzmasse dient und einen kontinuierlichen Zufluß von Gießharzmasse zu der Durchlaufentgasungseinrichtung 1 ermöglicht.

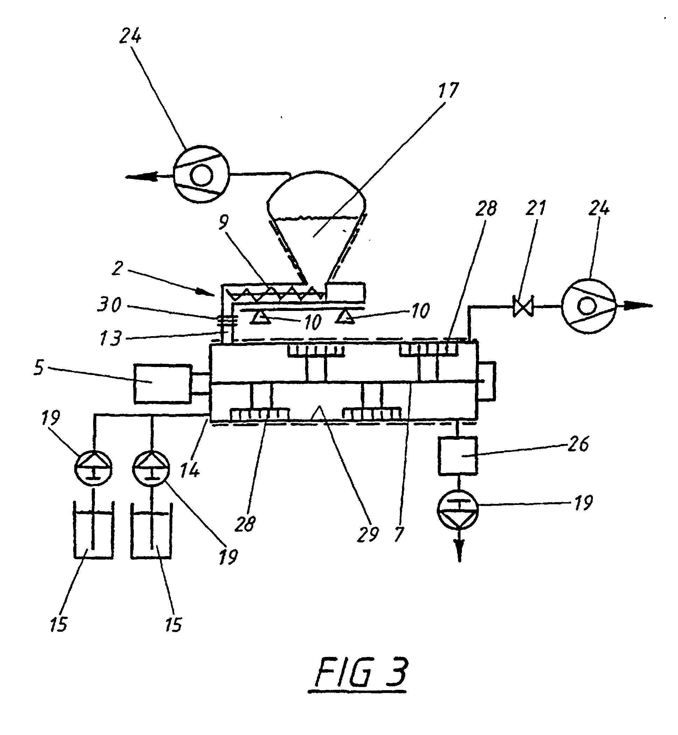

Mit der erfindungsgemäßen Anlage gemäß Figur 3 ist die Herstellung von fertiger Gießharzmasse ermöglicht. Dabei werden die beiden flüssigen Komponenten, nämlich einmal Härter und einmal Harz, welche in den jeweiligen Vorratsbehältern 15 aufgenommen sind, und ebenso der im Vorratsgefäß 17 aufgenommene Füllstoff kontinuierlich und synchron ohne Zwischenschaltung eines Mischers der Durchlaufentgasungseinrichtung 1 zugeführt, welche dann die Funktion des Mischers und des Entgasens übernimmt. Die Dosierung von Gießharz und Härter erfolgt volummetrisch über die Dosierpumpen 19, während die Zufuhr von Füllstoff mit dem gewünschten Rezepturanteil gravimetrisch über die der Förderschnecke 9 zugeordnete Waage 10 erfolgt. Zu diesem Zweck ist in die Zuführungsleitung zwischen Dosierelement 2 und Produkteinlaß 13 ein elastisches Kupplungselement eingesetzt.

Selbstverständlich können mit der Anlage gemäß Figur 3 über die Vorratsbehälter 15 auch zwei nicht miteinander reagierende Flüssigkeitskomponenten, bspw. Harz und Flexibilisator, zugeführt werden.

Der Druck im Vorratsgefäß 17 für den Füllstoff ist bei dem hier gewählten Ausführungsbeispiel an den Vakuumdruck der Durchlaufentgasungseinrichtung 1 angepaßt, weshalb eine Vakuumpumpe 24 an das Vorratsgefäß 17 angeschlossen ist. Hierdurch wird ein Luftdurchschlag vom Vorratsgefäß 17 in die Durchlaufentgasungseinrichtung 1 vermieden. Dagegen ist die Zuführung der flüssigen Komponenten, Gießharz und Härter, gegenüber einem Luftdurchschlag in die Durchlaufentgasungseinrichtung 1 unkritisch, sofern der Flüssigkeitsspiegel in den Vorratsbehältern 15 nur oberhalb der Ansaugöffnungen der von den Pumpeinrichtungen 19 in die Vorratsbehälter 15 eintauchenden Ansaugleitungen steht.

Ersichtlich weist die Durchlaufentgasungseinrichtung 1 bei einer direkten Zuführung von flüssiger Komponente und Füllstoff wenigstens zwei Produkteinlässe 13, 14 auf.

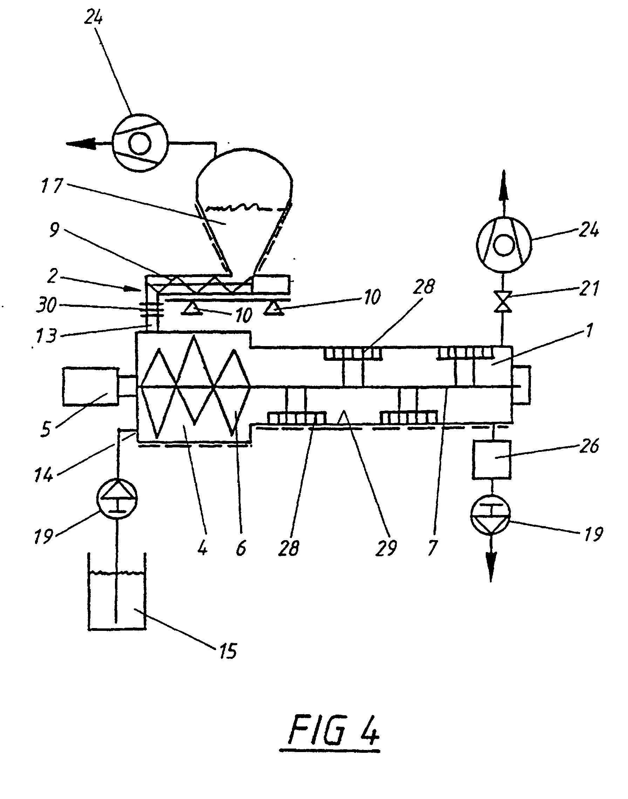

Die Ausführungsform gemäß Figur 4 unterscheidet sich von derjenigen gemäß Figur 3 vor allem dadurch, daß in die Durchlaufentgasungseinrichtung 1 ein Mischer 4 bzw. eine Mischzone integriert ist. Wie aus Figur 4 ersichtlich, ist dabei ein einzähliger Antrieb 5 für das Mischorgan 6 des Mischers 4 und für das die Auftrag- und Abstreifmittel 28 aufweisende Drehorgan 7 der Durchlaufentgasungseinrichtung 1 vorgesehen mit nur einer Antriebswelle, was den baulichen Aufwand erheblich vereinfacht.

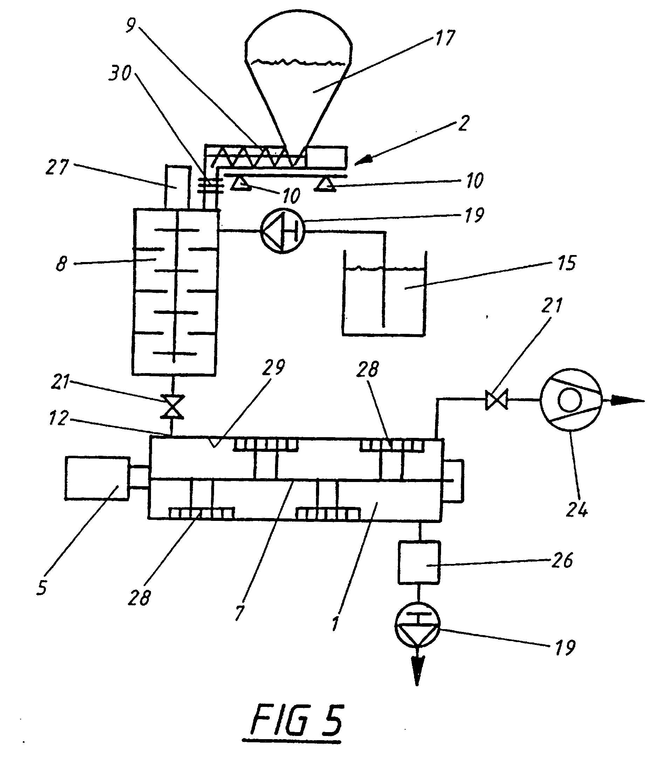

Bei dem Beispiel gemäß Figur 5 ist der Durchlaufentgasungseinrichtung 1 ein Durchlaufmischer 8 vorgeschaltet. Dies hat den Vorteil, daß die vorformulierte Komponente der Durchlaufentgasungseinrichtung 1 kontinuierlich zugeführt wird, wodurch eine Bauweise mit zwei im Gegentakt arbeitenden Mischern 3 entfallen kann.

Im Falle, daß, wie bei dem Beispiel gemäß Figur 5 der Durchlaufmischer 8 unter Atmosphärendruck steht, muß auch im Füllstoffbehälter 17 Atmosphärendruck herrschen. Steht dagegen der Durchlaufmischer 8 unter Vakuum, muß ein entsprechender Unterdruck im Vorratsgefäß 17 für den Füllstoff herrschen.

### Bezugszeichenliste

- 1 -: Durchlaufentgasungseinrichtung
- 2 -: Dosiermittel
- 3 -: Mischer
- 4 -: integrierter Mischer
- 5 -: Antrieb
- 6 -: Mischorgan
- 7 -: Drehorgan
- 8 -: Durchlaufmischer
- 9 -: Dosierschnecke
- 10 -: Waage
- 11 -: Zwischenbehälter
- 12 -: Produkteinlaß
- 13 -: Produkteinlaß
- 14 -: Produkteinlaß
- 15 -: Vorratsbehälter
- 16 -: Silo
- 17 -: Vorratsgefäß
- 18 -: Heizung
- 19 -: Pumpeinrichtung, Dosierpumpe
- 20 -: Fördereinrichtung
- 21 -: Ventil
- 23 -: Regelung
- 24 -: Vakuumpumpe
- 25 -: Durchlaufmischer
- 26 -: Sammelgefäß
- 27 -: Mischerantrieb
- 28 -: Auftrag- und Abstreifmittel
- 29 -: Entgasungsfläche
- 30 -: Kuppelelement

## Patentansprüche

1. Verfahren zum kontinuierlichen Mischen und Entgasen von flüssigen, gießfähigen Medien bestehend aus mehreren Gießharz-Komponenten oder wenigstens einer Gießharz-Komponente und einer Füllstoff-Komponente, wie Quarzmehl, Aluminiumoxid oder Farbstoff, mit einer unter Vakuum betriebenen Durchlaufentgasungs- und Mischeinrichtung (1) zum Entgasen der Gießharz-Komponenten oder Gießharz- und Füllstoff-Komponenten, welcher die Gießharz-Komponenten oder Gießharz- und Füllstoff-Komponenten dosiert und synchron über wenigstens zwei Produkteinlässe (13, 14) zugeführt und in welcher die Gießharz-Komponenten oder Gießharz- und Füllstoff-Komponenten gleichzeitig gemischt und entgast werden.

2. Verfahren nach Anspruch 1, **dadurch gekennzeichnet, dass** die Dosierung der Gießharz-Komponenten oder der Gießharzund Füllstoff-Komponenten volumetrisch und/oder gravimetrisch erfolgt.

3. Verfahren nach Anspruch 1 oder 2, **dadurch gekennzeichnet, dass** zumindest die Füllstoff-Komponente unter Vakuum gehalten ist.

4. Vorrichtung zum kontinuierlichen Mischen und Entgasen von flüssigen, gießfähigen Medien bestehend aus mehreren Gießharz-Komponenten oder wenigstens einer Gießharz-Komponente und einer Füllstoff-Komponente, wie Quarzmehl, Aluminiumoxid oder Farbstoff, mittels einer unter Vakuum betriebenen Durchlaufentgasungs- und -mischeinrichtung (1) zur Durchführung des Verfahrens nach einem der vorhergehenden Ansprüche, wobei die Durchlaufentgasungsund Mischeinrichtung (1) für ein gleichzeitiges Entgasen und Mischen der Gießharz-Komponenten oder Gießharz- und Füllstoff-Komponenten ausgebildet ist und wenigstens zwei Produkteinlässe (13, 14) für die Gießharz-Komponenten oder Gießharz- und Füllstoff-Komponenten aufweist, wobei Dosiermittel (2) angeordnet sind, über welche die Gießharz-Komponenten oder Gießharz- und Füllstoff-Komponenten der Durchlaufentgasungs- und -mischeinrichtung (1) dosiert zugeführt werden.

5. Vorrichtung nach Anspruch 4, **dadurch gekennzeichnet, dass** eine Vakuumpumpe (24) mit einem Vorratsgefäß (17) für die Füllstoff-Komponente verbunden ist.

6. Vorrichtung nach Anspruch 4 oder 5, **dadurch gekennzeichnet, dass** eine Ansaugöffnung der Ansaugleitung für die Gießharz-Komponente unterhalb des Flüssigkeitsspiegels der in einem Vorratsbehälter (15) befindlichen Gießharz-Komponente angeordnet ist.

## Claims

1. Method for continuous mixing and degasification of liquid, castable media consisting of several casting resin components or at least one casting resin component and a filler component, such as quartz powder, aluminium oxide or colorant, with throughflow degasification and mixing equipment (1), which is operated under vacuum, for degasification of the casting resin components or casting resin and filler components, to which the casting resin components or casting resin and filler components are metered and fed synchronously by way of at least two product inlets (13, 14) and in which the casting resin components or casting resin and filler components are simultaneously mixed and degasified.

2. Method according to daim 1, **characterised in that** the metering of the casting resin components or the casting resin and filler components is carried out volumetrically and/or gravimetrically.

3. Method according to claim 1 or 2, **characterised in that** at least the filler component is kept under vacuum.

4. Device for continuous mixing and degasification of liquid, castable media consisting of several casting resin components or at least one casting resin component and a filler component, such as quartz powder, aluminium oxide or colorant, by means of degasification and mixing equipment (1), which is operated under vacuum, for performance of the method according to one of the preceding claims, wherein the throughflow degasification and mixing equipment (1) is constructed for simultaneous degasification and mixing of the casting resin components or casting resin and filler components and has at least two product inlets (13, 14) for the casting resin components or casting resin and filler components, wherein metering means (2) are arranged, by way of which the casting resin components or casting resin and filler components are fed metered to the throughflow degasification and mixing equipment (1).

5. Device according to claim 4, **characterised in that** a vacuum pump (24) is connected with a storage vessel (17) for the filler component.

6. Device according to claim 4 or 5, **characterised in that** a suction opening of the suction duct for the casting resin component is arranged below the liquid level of the casting resin component disposed in a storage container (15).

## Revendications

1. Procédé de mélange en continu et de dégazage de milieux liquides aptes à la coulée composés de plusieurs composants de résine de coulée ou d'au moins un composant de résine de coulée et un composant de charge, comme de la poudre de quartz, de l'oxyde d'aluminium ou un colorant, au moyen d'un dispositif de dégazage pendant la coulée et de mélange exploité sous vide (1) et permettant de dégazer les composants de résine de coulée ou le composant de résine de coulée et de matière de charge, qui dose les composants de résine de coulée ou le composant de résine de coulée et le composant de matière de charge et l'amène de façon synchrone par au moins deux entrées de produit (13, 14) et dans lequel les composants de résine de coulée ou le composant de résine de coulée et le composant de charge sont mélangés et dégazés simultanément.

2. Procédé selon la revendication 1, **caractérisé en ce que** le dosage des composants de résine de coulée ou du composant de résine de coulée et du composant de charge s'effectue de façon volumétrique et/ou gravimétrique.

3. Procédé selon la revendication 1 ou 2, **caractérisé en ce qu'**au moins le composant de charge est maintenu sous vide.

4. Dispositif de mélange et de dégazage en continu de milieux liquides aptes à la coulée composés de plusieurs composants de résine de coulée où d'au moins un composant de résine de coulée et un composant de charge, comme de la poudre de quartz, de l'oxyde d'aluminium ou un colorant, au moyen d'un dispositif de dégazage pendant la coulée et de mélange exploité sous vide (1) pour réaliser le procédé selon l'une des revendications précédentes, dans lequel le dispositif de dégazage pendant la coulée et de mélange (1) est conçu pour un dégazage et un mélange simultanés des composants de résine de coulée ou des composants de résine de coulée et de charge, et présente au moins deux entrées de produit (13, 14) pour les composants de résine de coulée ou les composants de résine de coulée et de charge, où sont disposés des moyens de dosage (2), par lesquels les composants de résine de coulée ou les composants de résine de coulée et de charge sont amenés de façon dosée vers le dispositif de dégazage pendant la coulée et de mélange.

5. Dispositif selon la revendication 4, **caractérisé en ce qu'**une pompe à vide (24) est reliée à un réservoir (17) du composant de charge.

6. Dispositif selon la revendication 4 ou 5, **caractérisé en ce qu'**une ouverture d'aspiration de la conduite d'aspiration est disposée pour le composant de résine de coulée sous le niveau de liquide du composant de résine de coulée qui se trouve dans un réservoir (15).
